# EUROPEAN PATENT SPECIFICATION

(11) **EP 0 980 452 B1**
(45) Date of publication and mention of the grant of the patent: **24.10.2001**
(21) Application number: 98921914.2
(22) Date of filing: 05.05.1998
(51) Int. Cl.: E01C 19/20, A01C 15/18

(54) **SPREADER**
STREUER
EPANDEUSE

(30) Priority: 05.05.1997 NL 1005974
(43) Date of publication of application: 23.02.2000
(73) Proprietor: Beem B.V., 9781 AC Bedum (NL)
(72) Inventor: BOS, Johannes, Jacobus, NL-9781 CJ Bedum (NL)
(74) Representative: Ottevangers, Sietse Ulbe
(86) International application number: NL9800249
(87) International publication number: WO9850634

(56) References cited:
- EP-A- 0 462 899
- DE-U- 9 316 365
- GB-A- 2 036 522
- NL-A- 279 161
- NL-A- 7 206 161
- NL-A- 7 808 176

## Description

The invention relates to a spreader according to the introductory part of claim 1.

An apparatus of this type is known from European patent application EP-A-0 462 899. In this apparatus, the conveying element is constructed as a distributing and homogenizing roller arranged in a posterior, lowered outflow portion of a reservoir for spreading material. Located under a constriction of the outflow portion is the dosing structure, consisting of a dosing drum and guide walls along which this drum is rotatable with a slight play and between which a downwardly open spreading gap is left open under the drum. In operation, the dosing drum in its recesses drags along presented material along one of the guide walls and the material falls from the recesses in a manner distributed over the line mentioned when the recesses, in downwardly turned position, pass along the front of the spreading slot. By moving the spreader in a direction transverse to that line, a distribution of the spreading material over a surface area is obtained.

Such drum spreader is also known from European patent application EP-A-0 651 096, in which a stirring roller is located in a spreading hopper and a dosing roller is located therebelow.

Dutch patent application NL-A-78 08 176 discloses a spreader comprising a dosing roller rotatable in a passage, which roller has axial, helical grooves extending along its circumference.

A drawback of the known apparatuses as discussed is that during the spreading of lumpy, finely granulated material, an irregular dosing of the material is obtained, particularly if spreading takes place with a slight dosage per unit of area. Further, the packing of material in the area of the dosing drum brings about a heavy frictional load and often, material is not reliably released from the dosing drum, which further detracts from a regular distribution of the material to be spread.

The object of the invention is to provide a spreader whereby lumpy materials, such as anti-frost salt, fertilizer and moist lime (for instance lime in a form which is obtained as residual product during the refining of sugar), can be distributed over a surface area in a more even, low dosage.

According to the present invention, this object is realized by constructing a spreader of the type described in the preamble according to the characterizing part of claim 1.

Material fed by the conveying element and falling through the passage accumulates on the receiving shield, until the accumulated material at least largely hinders further material from falling through. Through movement of the dosing element, accumulated material is disturbed, as a result of which it falls over the free edge of the receiving shield and is thus distributed. The material fallen down clears space under the passage, permitting new material to pass through the passage. Thus, the dosing of spread material is determined by disturbance of material accumulated on the receiving shield by the dosing element, rather than by the feed by the conveying element. In this manner, it can be effected that material is dispensed in a manner in which it is evenly distributed over the line, independently of the distribution of the filling degree for the passages over the length of the line over which the material is distributed, at least as long as sufficient material is presented to the passage.

Since the material can fall freely through the passage as soon as space is released downstream of the passage through removal of material from the receiving shield and because the material is actively urged from the receiving shield, a constant delivery of material, evenly distributed over a line, can be obtained, which is little influenced by lumping and packing of the material.

The spreader according to the invention is also highly suitable for spreading finely granulated material, because the material to be spread is dispensed very gradually and is hence little dusty. If necessary, dustiness of the material can be further limited by using, before and/or behind the edge or edges along which the material falls down, downwardly projecting screens which may be closed, perforated or net-shaped.

It is observed that the spreader may of course also be provided with more passages, conveying elements, dosing elements and receiving shields.

Particular elaborations of the invention are laid down in the dependent claims.

Hereinafter, further objects, embodiments, effects and advantages of the invention will be specified on the basis of an exemplary embodiment that is presently preferred most, with reference to the accompanying drawings. In these drawings:
Fig. 1 is a somewhat schematic view, in section, of a spreader according to the invention;
Fig. 2 is a schematic top plan view of a spreading vehicle having a spreader according to the invention in operation;
Fig. 3 is a rear view of a spreader according to the invention;
Fig. 4 is an enlarged rear view of a right half of the spreader according to Fig. 3;
Figs. 5 and 6 are side elevations from the left and from the right of the spreader according to Figs. 3 and 4;
Fig. 7 is an interrupted side elevation in section, taken on the line VII-VII in Figs. 5 and 6; and
Fig. 8 is an interrupted side elevation in section, taken on the line VIII-VIII in Figs. 5 and 6.

The spreader 1 according to the invention, shown in the Figures in different degrees of detailedness, is composed of a conveying portion 2, a dosing portion 3 and a return portion 4, extending along a common line 5.

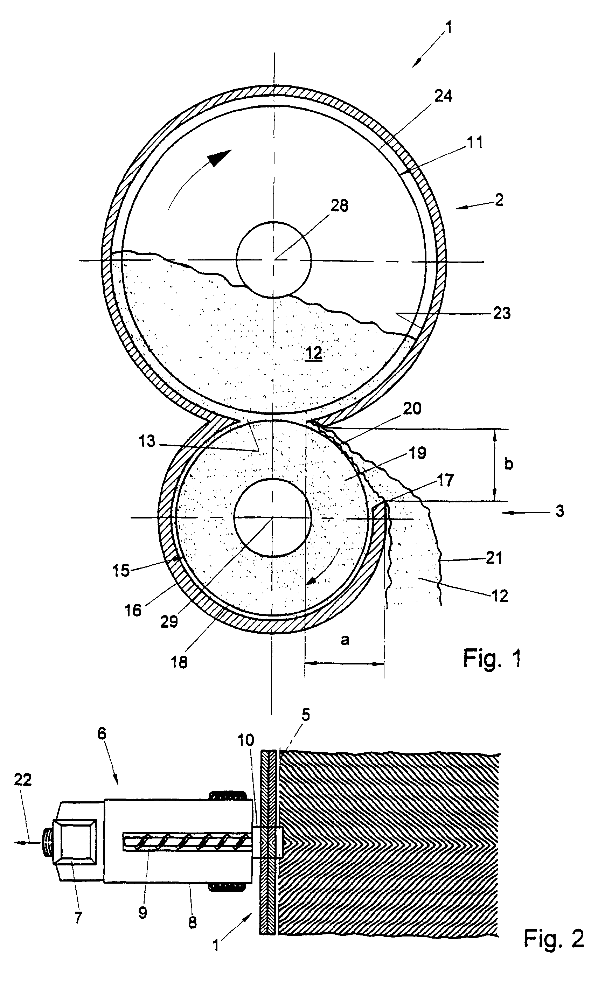

Fig. 2 show the spreader in a condition in which it is mounted on a spreading vehicle 6. The spreading vehicle 6 has a driver cabin 7, a reservoir 8 for material to be spread, which reservoir is located behind the driver cabin 7 and in which a conveying element in the form of a conveying screw 9 is arranged for passing material to be spread to the spreader 1. The conveying element may also be constructed differently, for instance as a conveyor belt.

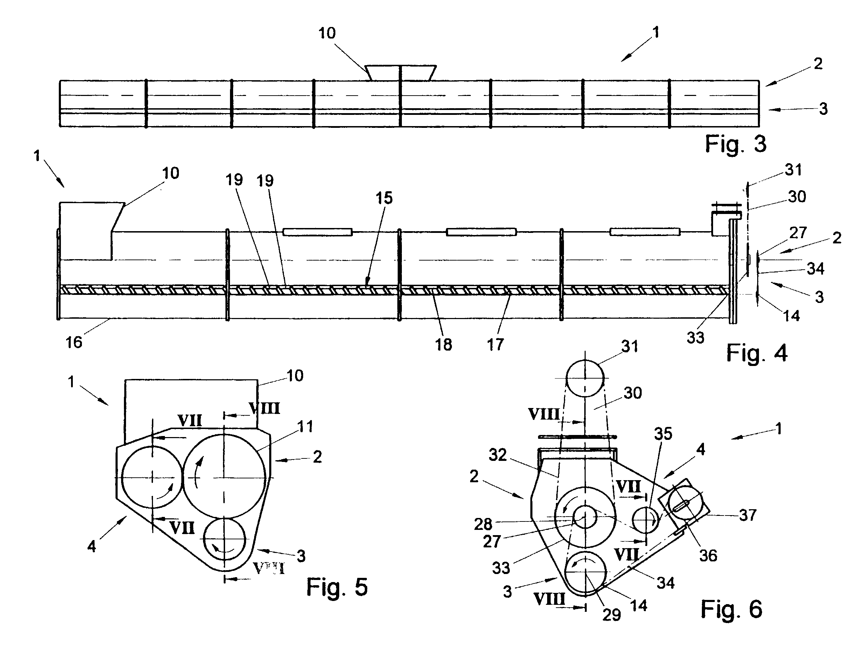

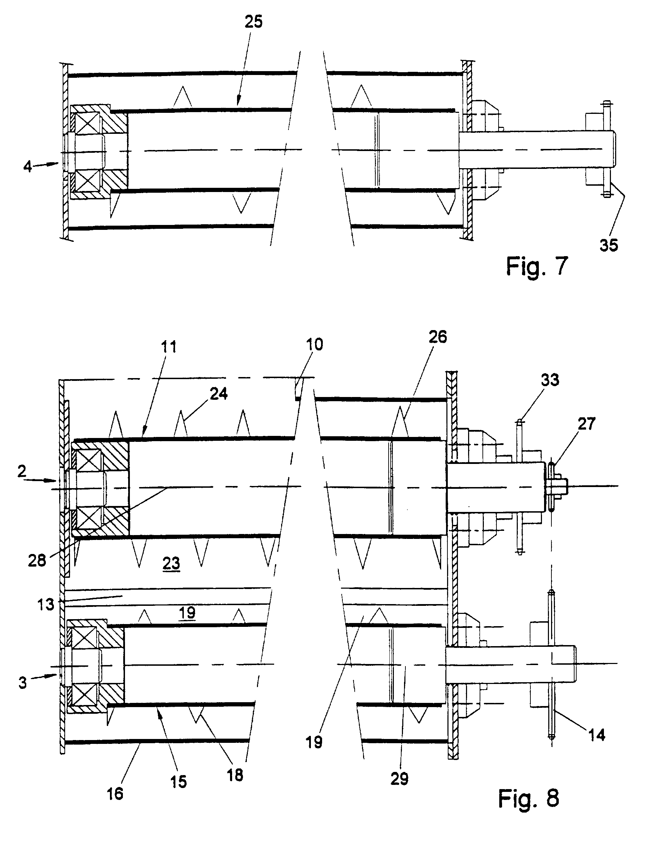

The spreader 1 comprises a hopper 10, in which material fed from the reservoir 10 can be received. The conveying portion 2 of the spreader 1 connecting to the hopper 10 comprises conveyors in the form of conveyor screws 11 which convey spreading material 12 outwards along the line mentioned and present it to the dosing portion 3. The spreader consists of two halves which, relative to a vertical longitudinal center plane therebetween, are of substantially symmetrical design. In Figs. 4-8, only the half is shown that, viewed from the rear, is situated on the right-hand side of the vertical longitudinal center plane.

Extending along the conveyor screws 11 are passages 13 along which spreading material 12 presented by the conveyor screws 11 can pass to the dosing portion 3.

The dosing portion 3, intended for passing fed spreading material 12 through the passage 13 in a dosed manner, is provided with a dosing element in the form of a dosing screw 15 and with a chain wheel 14 to which the dosing screw 15 is coupled. In the operating condition in which the spreader 1 is shown in the Figures, the dosing screw 15 is substantially located under the passage 13.

The dosing portion 3 is further provided with a receiving shield 16 located under the passage 13 and under the dosing screw 15. The receiving shield 16 has a free lateral edge 17 on one side thereof and, on the side of that lateral edge 17, projects in horizontal, transverse direction beyond the passage 13 (distance a).

Along windings 18 of the dosing screw 15 and the lateral edge 17 of the receiving shield 16, passageways 19 are in each case open, regardless of the position of the dosing screw 15.

As the receiving shield 16 is located under the passage 13, a wall 20 of accumulated spreading material fed by the conveyor screw 11 and fallen through the passage 13 is formed on the receiving shield 16, in operation. This wall 20 clogs the passage 13, as a result of which the flow of material 12 through the passage 13 is entirely or almost entirely stopped. In operation, the wall 20 on the receiving shield is however continuously disturbed by the rotation of the dosing screw 15 which provides that due to the virtual direction of movement of each winding at the level of the lateral edge 17, material 12 is pushed up and falls over the edge 17 as a shearing flow of material 21 which, after passing the edge 17, drops down freely. At least in so far as sufficient replenishment via the passage 13 takes place, the quantity of material 12 falling over the edge is determined by the disturbance effected by the dosing screw 15 and is virtually independent of the height of the material 12 standing above the opening 13. When a spreading vehicle 6 with a spreader 1 according to the present example is driven in the direction indicated by an arrow 22, a spreading pattern as shown schematically in Fig. 2 is formed. The herringbone pattern of strips on which relatively much and little material is spread is very fine. Generally, the differences, which are moreover rather small, are automatically equalized after some time, for instance by a treatment of the ground on which spreading has taken place, by the influence of precipitation or by vehicles passing over the surface on which spreading has taken place.

As the spreading material 12 is presented through a large passage 13, lump formation to a relatively large lump size hardly influences the supply of material through the passage 13, if at all. Because the material 12 is subsequently actively dispensed from the dosing portion 3 by disturbing the accumulation 20 such that a given flow of spreading material 21 falls over the edge 17 of the receiving shield, lump formation and sticking are of very little influence on the distribution of the material that is dispensed. In particular during the spreading of very finely granulated lumping material, such as moist lime that is obtained as residual product during the refining of sugar, the spreader according to invention proves to be applicable with particular advantage. However, the spreader 1 shown is also highly suitable for spreading anti-frost salt and fairly dry manure and fertilizer.

Between the passage 13 and the lateral edge 17, there is a height difference b and a distance in horizontal transverse direction a. For spreading most types of lumping spreading material, a ratio between the height difference b and the distance in horizontal transverse direction a of between 4:1 and 1:4 is suitable, while generally, ratios of between 2:1 and 1:2, and more particularly of between 1.5:1 and 1:1.5 are preferred.

More in particular, the height difference b and the distance in horizontal transverse direction a define an incline which is preferably as steep as, or is flatter than the average incline of a sliding face of the spreading material 12 to be spread when collapsing through shear between the passage 13 and the receiving shield 16. It is thus guaranteed that the receiving shield 16 projects sufficiently far to be able to support a wall 20 which clogs the passage 13 sufficiently to be able to control the delivery of spreading material, until it is disturbed by the dosing screw 15. In Fig. 1, this incline occurs in the form of a sliding face along which the wall 20 collapses.

To enable adapting the incline defined by the ratio of the measures *a* and *b* to different types or batches of spreading material having different characteristic inclines of collapse-sliding faces, the receiving shield may be adjustable relative to the passage between different positions with different ratios between the height difference and the distance in the above-mentioned horizontal transverse direction from the free edge 17 to the passage 13. However, because the spreading material 12 can fall in a reasonably thick flow along the free edge 17 of the receiving shield 16, a fixed edge projecting relatively far in transverse direction may also be opted for, so that, during the processing of the material to be spread which exhibits the least cohesion, sufficient support for the wall 20 is obtained. Material having more cohesion, which, during collapsing through shear, has a steep sliding face such that the base of the wall 20 does not reach the free edge 17, can then nevertheless be forced over the edge 17 to a sufficiently strong degree through a more intensive disturbance by enhanced movement of the dosing screw 15.

In fact, it is also possible to use a receiving shield having free lateral edges on two sides facing away from each other. Material can then be forced by the dosing element over the two lateral edges of the receiving shield. However, the embodiment shown, with a free edge 17 over which the material 20 accumulated on the shield 16 is forced, is preferred, because in this embodiment, at a given dosage, greater material flows 21 over the edge 17 occur, which are less sensitive to variations in granular size and the presence or absence of lumps.

In the spreader 1 shown, the conveying element 11 is located in a channel 23 extending along the line 5. The passage 13 forms a constriction between this channel 23 and a space located therebelow. Because the conveying element 11 for displacing and presenting spreading material 12 along the line 5, and the dosing element 15 are located on either side of the constriction 13, and projections thereof, in this case the screws 18, 24, are movable in the area of the passage, along paths extending closely along each other, the effect achieved is that in the area of the passage 13 strong shear occurs, whereby any lumps and strongly packed material are given a loose, finely granulated structure. These measures can with particular advantage be combined in a spreader having a receiving shield under the dosing element, because in that case, the wall 20 on the receiving shield, from which material is dosed by causing that wall of material to collapse, consists of even, loosened material.

The paths of the projections of the conveying element and the dosing element, which paths extend closely along each other adjacent the passage and preferably in widely different directions, can however also be advantageously used in drum spreaders without receiving shield under the dosing drum. In that case, too, because of the strong shear in the area between the conveying element and the dosing element, a loose finely granulated structured is imparted to the material to be spread and, accordingly, an improved dosability is obtained.

Constructing the conveying element of the conveying portion as a conveying auger 11 offers the advantage that a conveying element is obtained along which, in operation, a strong shear occurs. This is advantageous for releasing the material and for preventing spreading material from sticking to the conveying element. Further, through this measure, a particularly strong shear can moreover be obtained relative to material in the passage and material influenced by the dosing element.

The channel 23, in which the conveying auger 11 is located, closely connects to the auger 11. This prevents the possibility of material accumulating in the channel 23, which would impede the transport through the channel 23 and which, when different types of spreading material are successively spread, would cause fouling of the following type of spreading material with a type spread before it.

The conveyor screw 11 communicates with a return conveyor screw 25 for the upstream return of redundant spreading material. It can thus be guaranteed that in each case, sufficient supplementary spreading material is presented to the end of the conveying element 11, without, in the case of a reduced take-up by the conveying element, thrusts being generated which would have an adverse effect on the operation of the spreader.

In order to obtain an effective transfer of spreading material 12, fed redundantly to the downstream end of the conveyor screw 11, to the return conveyor screw 25 and to prevent thrusts of material against an end wall of the channel 23 in which the conveyor screw 11 is located, the conveyor screw 11 is provided, in the area where it communicates with the return conveyor screw 25, with a portion 26 having an oppositely wound thread.

An effective transfer of spreading material 12, fed redundantly to the downstream end of the conveyor screw 11, to the return conveyor screw 25 is further promoted in that the conveyor screw 11 is coupled to a transmission for rotating the conveyor screw 11 in a direction of rotation in which a portion of the conveyor screw 11 located under the rotary axis 28 moves towards the return conveyor screw 25.

Since the return conveying element is likewise designed as a conveyor screw 25, the drive of the return conveying element can readily be coupled to the drive of the conveyor screw 11 and the dosing screw 15. Further, the return conveyor screw forms a slender construction which occupies little space in the direction of travel 22.

The fact that the dosing element is designed as a rotor 15 whose rotary axis 29 is parallel to the line 5 along which the spreading material is to be distributed and comprises a projection 18 for disturbing the wall 20 of spreading material 12 which is supported by the receiving shield 16, is also advantageous for obtaining a simple common drive with the conveying element 11.

To prevent accumulations of material, the receiving shield 16 is designed as a receiving channel closely connecting to the path of the projection 18 of the dosing rotor 15. However, in accordance with the construction of the dosing element, the receiving shield may also be designed differently, for instance as a flat or V-shaped plate. Further, it is also possible to cause the receiving shield to move relative to a stationary dosing element. In such embodiment, the receiving shield may for instance comprise a wavy or serrated edge and be traversable in longitudinal direction, the dosing element being formed by a series of vertical partitions extending in transverse direction under the passage or passages.

Because the projection 18 is formed by a helical disturbing plate extending over the dosing rotor 15, a very even succession of continuous flows 21 of spreading material, moving along the edge 17, is obtained for the successive windings 18 in operation, to create a very even and constant delivery of material. This involves the continuous occurrence of a high degree of shear between the dosing screw 15 and the spreading material 12, so that caking of spreading material and, accordingly, locally deviating dosages are prevented. Moreover, caked material, if any, is quickly scraped away again by the strong shear. The windings of the dosing screw may form a single screw thread, but may also form a number of successive screw thread sections or blades. However, the use of a single screw thread offers the advantage that the resistance experienced by projections when moving through the spreading material is relatively slight.

In fact, the dosing rotor may, additionally or alternatively, also be provided with differently formed projections. The structure projecting from the rotor may for instance be designed as a pattern of radially projecting pins or spoons, as wavily circulating baffles. Further, instead of a dosing rotor, a differently designed element may be used for disturbing the wall of material to be spread on the receiving shield, such as a dosing element movable for oscillation in longitudinal direction.

For obtaining a constant, even distribution of the spreading material spread, it is further advantageous that the dosing screw 15 is rotatable in a rotational sense, in which it moves downwards on the side of the free edge 17 of the receiving shield 16. A possible explanation for this advantageous effect is that in each case, particularly the spreading material 12 that has arrived most recently via the passage 13 is forced over the edge 17, which material has obtained a loose structure with few lumps through the cooperation of the conveyor screw 11 and the dosing screw 15 in the area of the passage 13.

For driving the screws 11, 15, 25 for conveying, dosing and returning spreading material, a hydromotor 30 is used. The hydromotor 30 has a driven shaft mounting a chain wheel 31 over which a drive chain 32 extends. The drive chain further extends over a chain wheel 33 which is fixedly connected to the conveyor screw 11. Provided on the same shaft of the conveyor screw 11 is another chain wheel 27, over which a second chain 34 extends. This second chain 34 further extends over chain wheels 14, 35 coupled to the dosing screw 15 and the return conveyor screw 25 respectively. The second chain 34 further extends over a chain wheel 36 of a chain tensioner 37.

## Claims

1. A spreader for spreading spreading material (12) in a manner distributed over a line (5), comprising:
a conveying element (11) for displacing and presenting spreading material (12) along said line (5),
at least one passage (13) along said conveying element (11) for passing spreading material (12) presented, and
a dosing structure (15, 16) which, at least in operational condition, extends substantially under said passage (13) and which has a dosing element (15), wherein
the dosing structure (15, 16) further comprises a receiving shield (16) located under said passage (13) and said dosing element (15), said receiving shield (16) having a free lateral edge (17) on at least one side and projecting on said at least one side in horizontal transverse direction beyond said at least one passage (13), and wherein open passageways (19) extend from said passage (13) along said dosing element (15) and along said at least one lateral edge (17) of the receiving shield (16), **characterized in that** between said at least one passage (13) and said at least one lateral edge (17) there is a height difference *(b)* and a distance (*a*) in said horizontal transverse direction, and **in that** said height difference (*b*) and said distance (*a*) in said horizontal transverse direction are in a ratio of between 4:1 and 1:4.

2. A spreader according to claim 1, wherein between said at -least one passage (13) and said at least one lateral edge (17), there is a height difference (*b*) and a distance (*a*) in said horizontal transverse direction, and wherein said height difference (*b*) and said distance (*a*) in said horizontal transverse direction define an incline which is as steep as or flatter than the average incline of a sliding face of said spreading material (12) when collapsing through shear between said passage (13) and said receiving shield (16).

3. A spreader according to claim 2, wherein said receiving shield (16), relative to said passage (13), is adjustable between different positions having different ratios between said height difference (*b*) and said distance (*a*) in said horizontal transverse direction.

4. A spreader according to any one of the preceding claims, wherein said conveying element (11) is located in a channel (23) extending along said line (5), wherein said at least one passage (13) forms a constriction between said channel (23) and a space located therebelow and wherein said conveying element (11) and said dosing element (15) are located on either side of said constriction and projections (18, 24) thereof are movable in the area of said passage (13) along paths extending closely along each other.

5. A spreader according to any one of the preceding claims, wherein said conveying element is designed as a conveying auger (11).

6. A spreader according to claim 5, wherein said conveying auger (11) is located in a narrowly enclosing channel (23).

7. A spreader according to any one of the preceding claims, wherein said conveying element (11) communicates with a return conveying element (25) for the upstream return of redundant spreading material (12).

8. A spreader according to claim 7, wherein said conveying element is designed as a conveying auger (11) and wherein said conveying auger (11) has a portion (26) having an - oppositely wound thread in the area where it communicates with said return conveying element (25).

9. A spreader according to claim 8, wherein the conveying element (11) is coupled to a drive mechanism (30, 31, 32, 33) for rotating the conveying element (11) in a direction of rotation in which a portion of the conveying auger (11) located under the rotary axis (28) moves towards the return conveying auger (25).

10. A spreader according to any one of claims 7-9, wherein said return conveying element is designed as a conveying auger (25).

11. A spreader according to any one of the preceding claims, wherein said dosing element (15) is designed as a rotor having a rotary axis (29) parallel to said line (5) and comprising at least one projection (18) for disturbing a wall (20) of spreading material (12) supported by said receiving shield (16).

12. A spreader according to claim 11, wherein said at least one projection (18) extends helically over said rotor (15).

13. A spreader according to claim 11 or 12, further comprising a drive mechanism (14, 27, 30, 31, 32, 33, 34) for rotating the dosing element (15) in a rotational sense, wherein circumferential portions thereof move downwards on the side of said at least one free edge (17) of the receiving shield (16).

## Patentansprüche

1. Streuvorrichtung zum über eine Linie (5) verteilten Streuen von Streumaterial (12), mit:
- einem Förderelement (11) zum Bewegen und Zubringen des Streumaterials (12) entlang der Linie (5),
- wenigstens einem Durchlaß (13) entlang des Förderelements (il) zum Durchlassen von zugebrachtem Streumaterial (12), und
- einer Dosierstruktur (15, 16), die sich, wenigstens im Betriebszustand, im wesentlichen unter dem Durchlaß (13) erstreckt und ein Dosierelement (15) aufweist,
wobei
- die Dosierstruktur (15, 16) ferner einen unter dem Durchlaß (13) und dem Dosierelement(15) angeordneten Aufnahmeschild (16) aufweist, der auf wenigstens einer Seite einen freien Seitenrand (17) aufweist und auf dieser wenigstens einen Seite horizontal quergerichtet über den wenigstens einen Durchlaß (13) hinausragt, und wobei sich offene Durchlaßöffnungen (19) vom Durchlaß (13) entlang des Dosierelements (15) und entlang des wenigstens einen Seitenrandes (17) des Aufnahmeschildes (16) erstrecken,
**dadurch gekennzeichnet, daß**
- zwischen dem wenigstens einen Durchlaß (13) und dem wenigstens einen Seitenrand (17) ein Höhenunterschied (b) und ein Abstand (a) in der horizontalen Querrichtung besteht, und daß die Höhendifferenz (b) und der Abstand (a) in der horizontalen Querrichtung im Verhältnis zwischen 4:1 und 1:4 stehen.

2. Streuvorrichtung nach Anspruch 1, bei der zwischen dem wenigstens einen Durchlaß (13) und dem wenigstens einen Seitenrand (17) eine Höhendifferenz (b) und ein Abstand (a) in der horizontalen Querrichtung besteht, und bei der die Höhendifferenz (b) und der Abstand (a) in der horizontalen Querrichtung eine Neigung definieren, die so steil wie oder flacher als die durchschnittliche Neigung einer Gleitfläche des Streumaterials (12) ist, wenn dieses durch Scherung zwischen dem Durchlaß (13) und dem Aufnahmeschild (16) kollabiert.

3. Streuvorrichtung nach Anspruch 2, bei der der Aufnahmeschild (16) in bezug auf den Durchlaß (13) zwischen verschiedenen Positionen verstellbar ist, die unterschiedliche Verhältnisse zwischen der Höhendifferenz (b) und dem Abstand (a) in der horizontalen Querrichtung aufweisen.

4. Streuvorrichtung nach einem der vorhergehenden Ansprüche, bei der das Förderelement (11) in einem Kanal (23) angeordnet ist, der sich entlang der Linie (5) erstreckt, wobel wenigstens ein Durchlaß (13) eine Engstelle zwischen dem Kanal (23) und einem unter diesem befindlichen Raum bildet, und wobei das Förderelement (11) und das Dosierelement (15) auf beiden Seiten der Engstelle angeordnet sind und Vorsprünge (18, 24) derselben im Bereich des Durchgangs (13) entlang Wegen bewegbar sind, die sich nahe beieinander liegend erstrecken.

5. Streuvorrichtung nach einem der vorhergehenden Ansprüche, bei der das Förderelement als Förderschnecke (11) ausgebildet ist.

6. Streuvorrichtung nach Anspruch 5, bei der die Förderschnecke (11) in einem diese eng umgebenden Kanal (23) angeordnet ist.

7. Streuvorrichtung nach einem der vorhergehenden Ansprüche, bei der das Förderelement (11) mit einem Rückförderelement (25) für das stromaufwärtige Rückführen von überschüssigem Streumaterial (12) verbunden ist.

8. Streuvorrichtung nach Anspruch 7, bei der das Förderelement als eine Förderschnecke (11) ausgebildet ist und die Förderschnecke (11) einen Bereich (26) aufweist, der eine entgegengesetzt gedrehte Windung in dem Bereich aufweist, in dem sie mit dem Rückförderelement (25) in Verbindung steht.

9. Streuvorrichtung nach Anspruch 8, bei der das Förderelement (11) mit einem Antriebsmechanismus (30, 31, 32, 33) zum Drehen des Förderelements (11) in eine Drehrichtung verbunden ist, in dersich ein unter der Drehachse (28) befindlicher Bereich der Förderschnecke (11) in Richtung der Rückförderschnecke (25) bewegt.

10. Streuvorrichtung nach einem der Ansprüche 7-9, bei der das Rückförderelement als Förderschnecke (25) ausgebildet ist.

11. Streuvorrichtung nach einem der vorhergehenden Ansprüche, bei der das Dosierelement (15) als Rotor mit einer parallel zur Linie (5) verlaufenden Drehachse (29) ausgebildet ist und wenigstens einen Vorsprung (18) zum Stören einer von dem Aufnahmeschild (16) gestützten Wand (20) des Streumaterials (12) aufweist.

12. Streuvorrichtung nach Anspruch 11, bei der der wenigstens eine Vorsprung (18) schraubenlinienförmig über den Rotor (15) verläuft.

13. Streuvorrichtung nach Anspruch 11 oder 12, ferner mit einem Antriebsmechanismus (14, 27, 30, 31, 32, 33, 34) zum Drehen des Dosierelements (15) in einer Drehrichtung, wobei Umfangsbereiche desselben sich nach unten auf die Seite des wenigstens einen freien Randes (17) des Aufnahmeschildes (16) bewegen.

## Revendications

1. Epandeuse destinée à répartir un matériau d'épandage (12) de manière distribuée sur une ligne (5), comprenant :
un élément de transport (11) destiné à déplacer et présenter le matériau d'épandage (12) le long de la ligne (5),
au moins un passage (13) placé le long de l'élément de transport (11) et destiné au passage du matériau d'pandage (12) présenté, et
une structure de dosage (15, 16) qui, au moins à l'état de fonctionnement, s'étend pratiquement sous le passage (13) et possède un élément de dosage (15),
dans laquelle la structure de dosage (15, 16) comporte en outre un volet récepteur (16) placé sous le passage (13) et l'élément de dosage (15), ce volet récepteur (16) ayant un bord latéral libre (17) d'au moins un côté et dépassant de ce côté au moins en direction transversale horizontale au-delà dudit passage au moins (13), et dans laquelle des chemins ouverts (19) s'étendent depuis le passage (13) le long de l'élément de dosage (15) et le long dudit bord latéral au moine (17) du volet récepteur (16), **caractérisée en ce que**, entre le passage au moine (13) et le bord latéral au moins (17), existe une différence de hauteur (b) et une distance (a) en direction transversale horizontale, et **en ce que** la différence de hauteur (b) et la distance (a) en direction transversale horizontale sont dans un rapport compris entre 4/1 et 1/4.

2. Epandeuse selon la revendication 1, dans laquelle, entre le passage au moins (13) et le bord latéral au moins (17), il existe une différence de hauteur (b) et une distance (a) en direction transversale horizontale, et dans laquelle la différence de hauteur (b) et la distance (a) en direction transversale horizontale donne une inclinaison qui est aussi forte ou moins forte que l'inclinaison moyenne de la face de glissement du matériau d'épandage (12) lorsqu'il descend sous l'action des forces de cisaillement entre le passage (13) et le volet récepteur (16).

3. Epandeuse selon la revendication 2, dans laquelle le volet récepteur (16) est réglable par rapport au passage (13) entre des positions différentes donnant des rapports différents entre la différence de hauteur (b) et la distance (a) en direction transversale horizontale.

4. Epandeuse selon l'une quelconque des revendications précédentes, dans laquelle l'élément de transport (11) se trouve dans un canal (23) qui s'étend suivant ladite ligne (5), dans laquelle le passage au moins (13) forme un rétrécissement entre le canal (23) et un espace placé au-dessous, et dans laquelle l'élément de transport (11) et l'élément de dosage (15) se trouvent de part et d'autre du rétrécissement, et des saillies (18, 24) de ceux-ci sont mobiles dans la région du passage (13) le long de trajets qui s'étendent très près les uns des autres.

5. Epandeuse selon l'une quelconque des revendications précédentes, dans laquelle l'élément de transport est sous forme d'un vis de transport (11).

6. Epandeuse selon la revendication 5, dans laquelle la vis de transport (11) se trouve dans un canal (23) qui se referme intimement.

7. Epandeuse selon l'une quelconque des revendications précédentes, dans laquelle l'élément de transport (11) communique avec un élément de transport de retour (25) pour le retour vers l'amont du matériau d'épandage en excès (12).

8. Epandeuse selon la revendication 7, dans laquelle l'élément de transport est sous forme d'une vis de transport (11), et dans laquelle la vis de transport (11) a une partie (26) ayant un filet de sens opposé dans la région dans laquelle il communique avec l'élément de transport de retour (25).

9. Epandeuse selon la revendication 8, dans laquelle l'élément de transport (11) est couplé à un mécanisme d'entraînement (30, 31, 32, 33) destiné à faire tourner l'élément de transport (11) dans le sens de rotation dans lequel une partie de la vis de transport (11) placée sous l'axe rotatif (28) se déplace vers la vis de transport de retour (25).

10. Epandeuse selon l'une quelconque des revendications 7 à 9, dans laquelle l'élément de transport de retour est sous forme d'une vis de transport (25).

11. Epandeuse selon l'une quelconque des revendications précédentes, dans laquelle l'élément de dosage (15) est réalisé sous forme d'un rotor ayant un axe de rotation (29) parallèle à ladite ligne (5) et comprenant au moins une saillie (1B) destinée à perturber la paroi (20) du matériau d'épandage (12) supportée par le volet récepteur (16).

12. Epandeuse selon la revendication 11, dans laquelle une saillie au moins (183) s'étend en hélice sur le rotor (15).

13. Epandeuse selon la revendication 11 ou 12, comprenant en outre un mécanisme d'entraînement (14, 27, 30, 31, 32, 33, 34) destiné à faire tourner l'élément de dosage (15) dans un sens de rotation, dans laquelle les parties circonférentielles de l'élément se déplacent vers le bas du côté du bord libre au moins (17) du volet récepteur (16).
